# EUROPÄISCHE PATENTANMELDUNG

(11) **EP 2 048 537 A2**
(43) Veröffentlichungstag der Anmeldung: **15.04.2009**
(21) Anmeldenummer: 08105535.2
(22) Anmeldetag: 09.10.2008
(51) Int. Cl.: G02B 27/48

(54) **Optische Anzeigeeinrichtung mit einem Mikrolinsenarray**

(30) Priorität: 11.10.2007 DE 102007048850
(71) Anmelder: ROBERT BOSCH GMBH, 70442 Stuttgart (DE)
(72) Erfinder: Herzog, Bernhard, 70619 Stuttgart (DE); Thominet, Vincent, CH 1110 Morges (CH); Fiess, Reinhold, 77770 Durbach (DE); Grimm, Dietmar, 71696 Moeglingen (DE)

(57) **Zusammenfassung**

Die Erfindung bezieht sich auf eine optische Anzeigeeinrichtung mit wenigstens einer Laserlichtquelle (1), einer Laserstrahllenkeinrichtung (2) sowie einer Abbildungsoptik (3), mit einem Mikrolinsenarray. Um konstruktiv platzsparend und effizient eine Einheit zu schaffen, durch die innerhalb der Abbildungsoptik der im Zusammenhang mit koherentem Licht auftretende Speckleeffekt verringert werden kann, ist vorgesehen, dass die Abbildungsoptik eine Reflexionsfläche (28) mit einer Vielzahl von Abschnitten aufweist, die gegeneinander geneigt und/oder verschoben sind.

## Beschreibung

### STAND DER TECHNIK

Die Erfindung liegt auf dem Gebiet der optischen Anzeigen, die sich als Lichtquelle einer Laserlichtquelle bedienen.

Elektronische Anzeigeeinrichtungen können nach verschiedenen Prinzipien konstruiert sein, wobei die verbreitetste die bei Fernsehgeräten und Computerbildschirmen verwendeten LCD-Bildschirme sind.

Es werden teilweise entsprechende Mikroarrays entweder im Durchlichtverfahren oder im Reflexionsverfahren auch für Laserprojektionsanzeigen verwendet, beispielsweise bei Beamern für die Leinwandprojektion, bei Rückprojektoren und bei den sogenannten Head-up-Displays, bei denen in einem Fahrzeug oder einem Flugzeug über eine Windschutzscheibe Informationsanzeigen und Bilder für den Betrachter eingespiegelt werden.

Die Verwendung von Laserprojektionsanzeigen hat den Vorteil, dass Laserlicht kostengünstig in hoher Intensität verfügbar ist und dass die entsprechenden Lichtquellen auch polychrom zuverlässig zur Verfügung stehen.

Es ergeben sich im Gegenzug jedoch laserspezifische Probleme, beispielsweise aus sogenannten Speckleeffekten, das heißt Kohärenzeffekten, durch die Interferenzen zwischen verschiedenen Bildteilen, die durch koherentes Licht erzeugt werden, durch Unregelmäßigkeiten optischer Elemente, beispielsweise von Reflexionsflächen sichtbar werden.

Aus dem Stand der Technik sind einige Konstruktionen bekannt, die unter anderem auch der Reduktion des Speckleeffekts dienen, wobei insbesondere Mikrolinsenarrays zur Pupillenvervielfachung in diesem Zusammenhang verwendet werden.

Aus der US 5563710 ist ein Laserprojektionssystem bekannt, bei dem mittels eines Laserarrays ein Gegenstand beleuchtet und über ein Regelsystem mit der reflektierten Lichtstärke als Regelgröße ein Abbild erzeugt wird, das sich derselben Laserlichtquelle über Beamsplitter zur Lichterzeugung bedient.

Aus der US 5971545 ist eine Projektionsanzeige bekannt, die mit einem reflektierenden Modulator arbeitet.

Die US 5777789 bedient sich eines ähnlichen Prinzips mit doppelt brechenden Lichtschaltelementen.

Aus der US 6183092 ist ein Laserprojektorsystem bekannt, das sich eines reflektiven Flüssigkristallarrays zur Modulation und entsprechenden Bilderzeugung bedient.

In diesem Dokument ist auch das Problem von Laserspeckles beschrieben, dem Phänomen, das sich bei Verwendung von Laserlicht zur Bilderzeugung einstellt und das auf der hohen Kohärenz des Laserlichts beruht. Es ergeben sich im Bild körnige Strukturen, die von Interferenzen aufgrund von Unregelmäßigkeiten der beteiligten optischen Flächen herrühren.

Aus dem Stand der Technik sind weiter auch Maßnahmen bekannt, die dem Problem der Laserspeckles entgegenwirken.

Beispielsweise ist aus der WO 2004064410 A1 eine Laserprojektionsanordnung bekannt, die ein Mikrolinsenarray und eine Laserlichtquelle aufweist, wobei als Laserlichtquelle ein Multimodenlaser verwendet wird, um das Speckling zu reduzieren.

Aus der US 2005/0248849 A1 ist ein optisches Anzeigeelement bekannt mit einem Mikrolinsenarray und einer Reflexionsfläche. In Zusammenhang mit der Reflexion wird das Mikrolinsenarray zur sogenannten Pupillenvervielfachung und -erweiterung verwendet, wodurch in Zusammenhang mit koherentem Licht die Kohärenz verringert und der Speckleeffekt herabgesetzt wird.
Aus der EP 1521110 A1 ist eine als Kohärenzminderer bezeichnete Anordnung bekannt, in der mittels einer Vielzahl von doppelbrechenden Elementen verschiedene Anteile eines ein Mikrolinsenarray durchlaufenden Lichts unterschiedlich bezüglich des optischen Weges versetzt werden, wodurch ebenfalls die Kohärenz vermindert oder zerstört und damit der Speckleeffekt verringert wird.

### VORTEILE DER ERFINDUNG

Vor dem Hintergrund des Standes der Technik liegt der vorliegenden Erfindung die Aufgabe zugrunde, eine optische Anzeigeeinrichtung mit einer Laserlichtquelle zu schaffen, die konstruktiv besonders einfach und kostengünstig aufgebaut ist und eine gute Bildqualität mit hoher Lichtstärke und Reduzierung des Speckleeffektes verbindet.

Die Aufgabe wird gemäß der Erfindung mit den Merkmalen des Patentanspruchs 1 gelöst.

Durch die Verwendung eines sogenannten Mikrolinsenarrays, das heißt einer Vielzahl von Linsen mit Durchmessern im Bereich einiger Mikrometer, die im Strahlengang nebeneinander angeordnet sind, wird eine Pupillenvervielfachung erreicht, die bei einer Abbildungseinrichtung mit einer Laserlichtquelle die geometrische Kohärenz verringert und damit Speckleeffekte reduziert.

Durch die zusätzliche Verwendung einer Reflexionsfläche kann beispielsweise dasselbe Mikrolinsenarray im Strahlengang mehrfach durchlaufen werden, wodurch der Effekt der Pupillenvervielfachung mehrfach erreicht wird. Damit können weitere Mikrolinsenarrays eingespart werden. Zudem ist bei der Verwendung von reflektierenden Flächen die Dispersion, das heißt die Wellenlängenabhängigkeit des Strahlengangs weitestgehend eliminiert und auch die Abhängigkeit der Reflexionsintensität vom Einfallwinkel ist gering, so dass die Kombination aus einem Mikrolinsenarray und einer Reflexionsfläche gerade für die Off-Axis-Verwendung eines solchen optischen Elementes vorteilhaft ist. Durch Teilung der Reflexionsfläche in eine Vielzahl von Abschnitten, die gegeneinander geneigt sind, können verschiedene Effekte erreicht werden. Einerseits kann die gesamte Reflexionsfläche makroskopisch eine facettenartig gekrümmte oder gerundete Fläche aufweisen, die konkav oder konvex, sphärisch oder parabolisch gestaltet sein kann, um makroskopisch einen Hohlspiegel mit den gewünschten Abbildungseigenschaften zu bilden. Andererseits können die einzelnen Abschnitte auch facettenähnlich parallel zueinander angeordnet sein, um bestimmte Reflexionswinkel zu ermöglichen, ohne dass die gesamte Reflexionsfläche gegenüber dem Mikrolinsenarray geneigt sein muss. Hierdurch lassen sich dann zu stark keilförmige Zwischenräume zwischen dem Mikrolinsenarray und der Reflexionsfläche und damit zu unterschiedliche optische Wege für die einzelnen Lichtstrahlen vermeiden. Zudem kann durch die Neigung der einzelnen Abschnitte gegeneinander auch jeweils das gewünschte Element des Mikrolinsenarrays jedem einzelnen Abschnitt zugeordnet werden.

Auf diese Weise lässt sich beispielsweise erreichen, dass der von einem Abschnitt der Reflexionsfläche reflektierte Strahlenteil entweder genau eine Mikrolinse oder, wenn dies gewünscht wird, gerade mehrere Mikrolinsen trifft, um eine Vervielfachung der Pupillenzahl zu erreichen.

Es ergeben sich damit Strahlführungen, die allein mit Mikrolinsenarrays oder flachen Reflexionsflächen nicht zu erreichen sind.

Die einzelnen Abschnitte der Reflexionsfläche können mit ihren Rändern unmittelbar aneinander anschließen, so dass beispielsweise eine gleichmäßig geneigte oder gekrümmte Reflexionsfläche mit oder ohne Kanten entsteht. Die einzelnen Abschnitte können jeweils eine ebene Fläche bilden, um eine passende Ausrichtung der Einzelstrahlen relativ zu dem Mikrolinsenarray zu ermöglichen, sie können jedoch auch einzeln jeweils einen Kugeloberflächenabschnitt bilden, um auf mikroskopischer Ebene die Strahlen zu fokussieren.

Insgesamt kann die Reflexionsfläche, zusammengesetzt aus den einzelnen Abschnitten, konkav oder konvex geformt sein, um auf makroskopischer Ebene einen Hohlspiegel zu bilden, der zu der optischen Abbildung beiträgt. Dabei kann die Reflexionsfläche sowohl in dem Fall, dass sie eben ist, als auch in dem Fall einer gekrümmten Reflexionsfläche derart gegenüber dem Mikrolinsenarray schräg gestellt sein, dass ein zwischen beiden angeordneter Luftspalt oder auch ein transparenter Körper keilförmig ausgebildet ist, um für die verschiedenen Abschnitte beziehungsweise die verschiedenen Teile des Mikrolinsenarrays in der Strahlenführung jeweils unterschiedlich lange optische Wege zu bilden, die bei den verschiedenen Teilstrahlen eine Reduzierung der Kohärenz in Bezug auf andere, einen anderen optischen Weg durchlaufende Teilstrahlen bewirken.

Es kann vorteilhaft vorgesehen sein, dass die Flächennormalen der Abschnitte zueinander zumindest gruppenweise parallel sind.

Insbesondere dann, wenn alle Abschnitte zwar schräg zu der Reflexionsfläche, jedoch zueinander parallel ausgerichtet sind, ergeben sich platzsparende und Material sparende Einsatzmöglichkeiten.

Sowohl bei ebenen als auch bei gekrümmten Abschnitten beziehungsweise einer ebenen oder gekrümmten Reflexionsfläche ist es vorteilhaft, wenn die einzelnen spiegelnden Abschnitte aus einem spiegelnden Material bestehen oder mit einem derartigen Material beschichtet sind, um die Intensität der Reflexion, das heißt den Reflexionskoeffizienten im Sinne einer möglichst lichtstarken Abbildung zu optimieren.

Die Teilung des Mikrolinsenarrays kann vorzugsweise von einem Mittenabstand zwischen den einzelnen Mikrolinsen von 50 Mikrometern bestimmt sein. Dieser sogenannte Pitch kann aber generell zwischen wenigen 10 und einigen 100 Mikrometern betragen. Der Linsendurchmesser der Mikrolinsen kann dabei typischerweise zwischen wenigen 10 und wenigen 100 Mikrometern betragen, vorteilhaft beispielsweise 100 Mikrometer. Die Teilung der Abschnitte der Reflexionsfläche kann in denselben Größenordnungen liegen, beispielsweise mit Abmessungen einzelner Abschnitte zwischen 10 und 500 Mikrometern, insbesondere zwischen 50 und 200 Mikrometern.

Dabei kann es in Zusammenschau mit der Teilung des Mikrolinsenarrays vorteilhaft sein, wenn die Zahl der Abschnitte der Reflexionsfläche zwischen dem 0,2-fachen und dem 3-fachen der Zahl der Mikrolinsen, insbesondere zwischen dem 0,5-fachen und 2-fachen der Zahl der Mikrolinsen liegt, jeweils auf denselben Strahlquerschnitt bezogen. Damit kann einerseits erreicht werden, dass ein Abschnitt der Reflexionsfläche das Licht auf mehrere Linsen des Mikrolinsenarrays reflektiert, oder, wenn dies gewünscht wird, die Abschnitte der Reflexionsfläche jeweils einzeln den Linsen des Mikrolinsenarrays zugeordnet sind.

Eine vorteilhafte Ausgestaltung der Erfindung sieht vor, dass die individuelle Ausdehnung einzelner Abschnitte und/oder der Mikrolinsen des Mikrolinsenarrays jeweils quer zur optischen Strahlrichtung entlang der von dem Laserstrahl überstrichenen Fläche variiert.

Durch diese Maßnahme kann erreicht werden, dass durch die Reflexionsfläche und/oder das Mikrolinsenarray im Zusammenwirken die geometrische Kohärenz des Laserlichts weiter reduziert wird.

Dies kann im übrigen auch dadurch erreicht werden, dass die Neigung einzelner Abschnitte gegenüber der Flächennormalen der Reflexionsfläche in geringem Maß statistisch variiert.

Auf diesen Effekt der Reduzierung von Kohärenz zur Verminderung von Speckleeffekten kann auch dadurch hingewirkt werden, dass die Brennweite der einzelnen in den Abschnitten gebildeten Hohlspiegel über die Reflexionsfläche variiert und/oder dadurch, dass die Brennweite der einzelnen Mikrolinsen des Mikrolinsenarrays über die Fläche des Mikrolinsenarrays variiert.

Insgesamt kann bei der optischen Anzeigeeinrichtung die Laserlichtquelle beziehungsweise die Laserstrahllenkeinrichtung mit den Proportionen der Abbildungsoptik insbesondere der Reflexionsfläche und/oder dem Mikrolinsenarray derart gestaltet werden, dass der Laserstrahl und die Größe der Abschnitte der Reflexionsfläche derart aufeinander abgestimmt sind, dass der Laserfleck auf der Reflexionsfläche mehr als einen einzelnen Abschnitt berührt.

Damit wird ein einzelner von der Laserlichtquelle dargestellter Lichtpunkt durch mehrere Abschnitte der Reflexionsfläche und/oder mehrere Linsen des Mikrolinsenarrays abgebildet, so dass die Abbildungen einander überlagern und durch die unterschiedlichen optischen Wege der Beiträge zur Abbildung die Kohärenz verringert oder zerstört wird.

### ZEICHNUNGEN

Im Folgenden wird die Erfindung anhand eines Ausführungsbeispiels in einer Zeichnung gezeigt und anschließend beschrieben.

Dabei zeigt
Figur 1 den grundsätzlichen Aufbau einer optischen Anzeigeeinheit;
Figur 2 die Funktionsweise eines Mikrolinsenarrays;
Figur 3 die Fokussierungseigenschaften eines Mikrolinsenarrays;
Figur 4a eine ebene Reflexionsfläche mit Einzelabschnitten;
Figur 4b eine gekrümmte Reflexionsfläche mit Abschnitten;
Figur 5 sphärische Abschnitte einer Reflexionsfläche;
Figur 6 eine Simulation eines Strahlengangs bei einer Abbildung durch ein Mikrolinsenarray und eine Reflexionsfläche;
Figur 7 eine optische Anzeigeeinrichtung mit einem Mikrolinsenarray und einer Reflexionsfläche;
Figur 8 eine Draufsicht auf eine Reflexionsfläche;
Figur 9 einen Querschnitt eines Mikrolinsenarrays;
Figur 10 einen Querschnitt einer Reflexionsfläche mit konkaven Abschnitten;
Figur 11 einen Querschnitt einer Reflexionsfläche mit parabolischen Abschnitten;
Figur 12 das Zusammenwirken eines Mikrolinsenarrays mit einer Reflexionsfläche;
Figur 13a eine optische Anzeigeeinrichtung mit einer Kombination aus einem Mikrolinsenarray und einer konvex gekrümmten Reflexionsfläche,
Figur 13b eine in Facetten aufgeteilte Reflexionsfläche,
Figur 14a den Strahlengang bei einer Kombination eines Mikrolinsenarray mit einer in geneigte Facetten aufgeteilten Reflexionsfläche sowie
Figur 14b eine detailliertere Darstellung des Strahlengangs aus Figur 14a.

### BESCHREIBUNG DER AUSFÜHRUNGSBEISPIELE

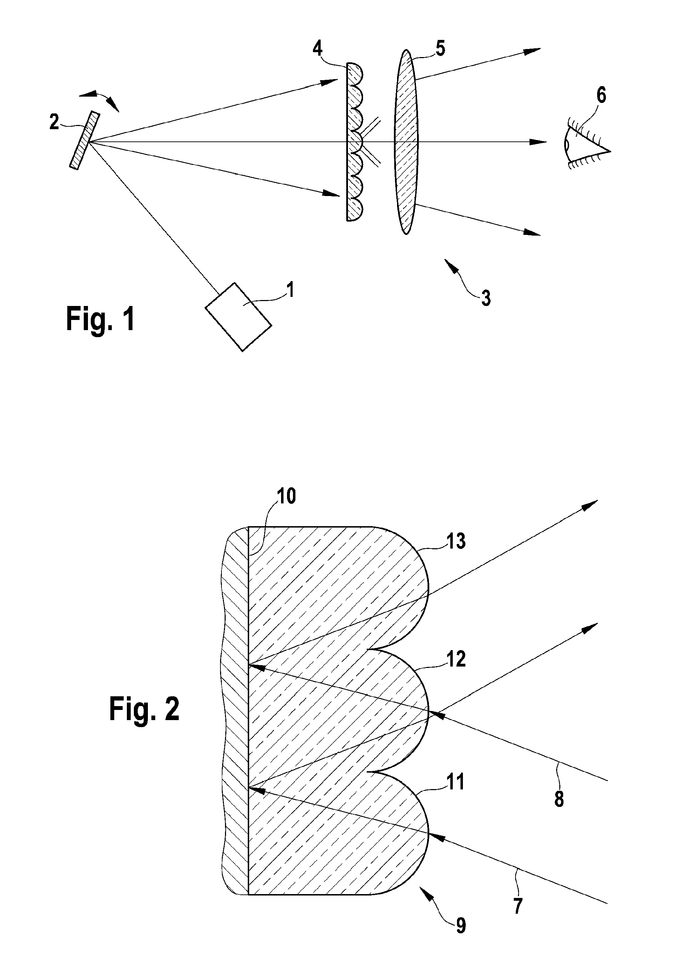

Figur 1 zeigt schematisch den Aufbau einer optischen Anzeigeeinrichtung mit einer Laserlichtquelle 1, einer Laserstrahllenkeinrichtung 2 sowie einer Abbildungsoptik 3. Die Abbildungsoptik weist eine Streuscheibe 4 mit einem Mikrolinsenarray und weitere Abbildungselemente auf, die mit 5 bezeichnet und symbolisch durch eine einzelne Linse repräsentiert sind.

Dadurch dass die Streuscheibe 4 mit einem Mikrolinsenarray versehen ist, werden die Bildpunkte, die mittels des Laserstrahls auf die Streuscheibe gezeichnet werden, besonders effektiv in Richtung des Betrachters 6 gebündelt und können lichtstark durch folgende optische Elemente abgebildet werden.

Die Figur 2 zeigt schematisch den Strahlengang zweier paralleler Laserlichtstrahlen 7, 8, die in ein Mikrolinsenarray 9 eintreten, an dessen Rückwand 10 reflektiert werden und aus dem Array wieder austreten.

Der erste Strahl 7 tritt in eine erste Mikrolinse 11 ein, wird an der Rückwand 10 reflektiert und tritt durch eine zweite Mikrolinse 12 wieder aus.
Der zweite Strahl 8 tritt durch die zweite Mikrolinse 12 ein, wird an der Rückwand 10 reflektiert und tritt durch eine dritte Mikrolinse 13 wieder aus.

Da die einzelnen Lichtstrahlen bezüglich ihrer Breite eine endliche Ausdehnung haben, die beispielsweise mit einem Intensitätsprofil entsprechend einer Gaußverteilung dargestellt werden kann, tritt ein Teil jedes einzelnen Lichtstrahls auch in benachbarte Mikrolinsen ein und jeweils durch benachbarte Mikrolinsen wieder aus.

Die Abbildung eines einzelnen eintretenden Strahls findet daher regelmäßig durch eine Mehrzahl von Mikrolinsen und deren überlagerte Bilder statt.

Insgesamt ergibt sich für eine Abbildung der Effekt der sogenannten Pupillenerweiterung beziehungsweise Pupillenvervielfachung, der eine Vergrößerung der numerischen Appertur sowie eine Verringerung der geometrischen Kohärenz, das heißt der Kohärenz parallel einfallender Lichtstrahlteile mit sich bringt und damit den sogenannten Speckleeffekt, das heißt die Interferenz verschiedener Bildteile miteinander durch Unregelmäßigkeiten an reflektierenden oder abbildenden Oberflächen verringert.

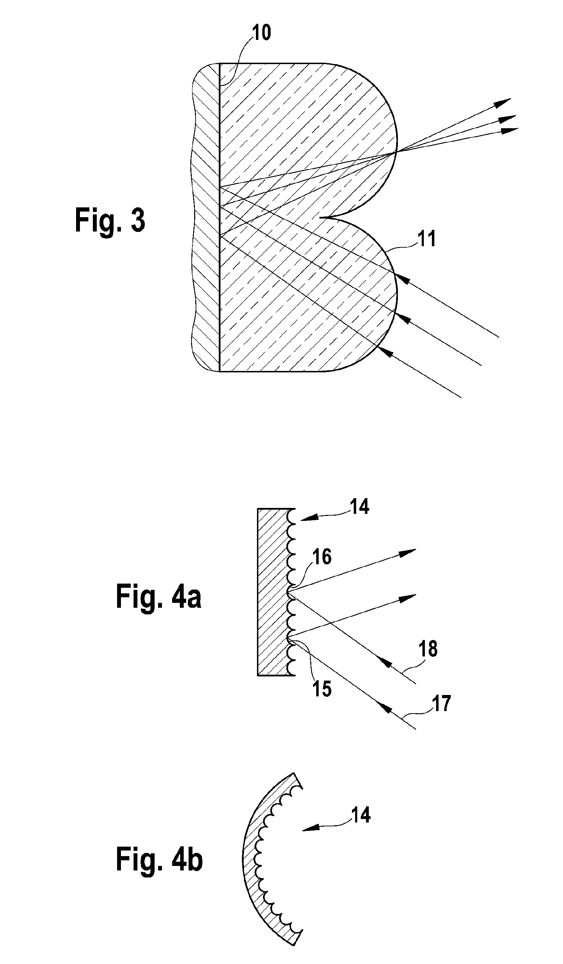

In der Figur 3 ist dargestellt wie die Strahlteile, die durch eine einzelne Mikrolinse 11 einfallen, nach der Reflexion an der Rückfläche des Mikrolinsenarrays fokussiert werden. Das Mikrolinsenarray wirkt wegen der kurzen Brennweite der Mikrolinse wie eine Streuscheibe mit intensivierter Reflexion.

In der Figur 4a ist schematisch eine Reflexionsfläche 14 gezeigt, in der eine Vielzahl von Reflexionselementen 15, 16 beispielsweise in Form von sphärischen Mulden/Hohlspiegeln zusammengefasst sind. Die entsprechenden Reflexionselemente können in einer ebenen Fläche nebeneinander liegen, sie können jedoch auch, wie in der Figur 4b gezeigt, in einer gekrümmten Reflexionsfläche liegen.

In der Figur 4a sind Einfallsstrahlen 17, 18 gezeigt, die jeweils in einzelnen Reflexionselementen reflektiert werden.

Für die einzelnen Strahlen gilt bei der Reflexion das in Zusammenhang mit Figur 2 Gesagte, dass nämlich die Ausdehnung eines Strahls mehrere benachbarte Reflexionselemente überdecken kann, so dass jeder Strahl durch mehrere Reflexionselemente abgebildet wird und die Bilder der Reflexionselemente sich überdecken, was zu einem Ausgleich von interferometrischen Effekten und damit zu einer Verringerung des Speckleeffekts führt.

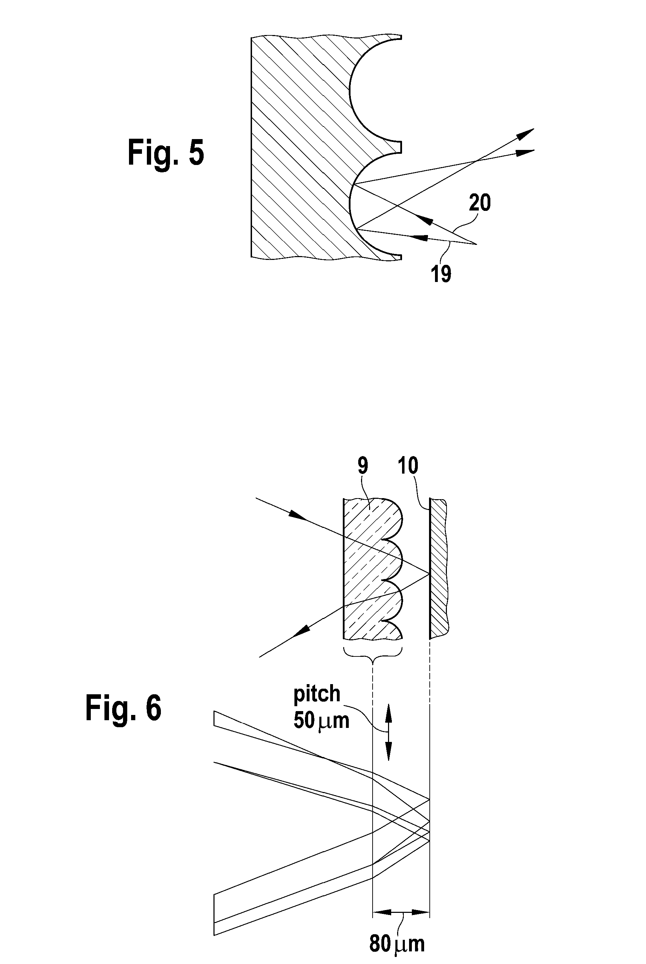

In der Figur 5 ist eine Fokussierung von zwei Strahlen 19, 20 an den kurzbrennweitigen Reflexionselementen gezeigt.

Die Figur 6 zeigt im unteren Teil das Ergebnis einer Strahlensimulation, bei der eine Vielzahl von Lichtstrahlen nach Durchlaufen eines Mikrolinsenarrays 9 von einer Reflexionsfläche 10 reflektiert worden sind. Es zeigt sich, dass der Effekt der Pupillenerweiterung und der Vergrößerung der numerischen Apertur durch das Mikrolinsenarray nach 2-fachem Durchlaufen des Arrays aufgrund der Reflexion verstärkt wird. Dieser Effekt kann durch entsprechende Gestaltung der Reflexionsfläche -entweder geeignete Reflexion der Einzelstrahlen durch die Ausrichtung der einzelnen Abschnitte oder auch ein Einfluß auf die Abbildung durch hohlspiegelartige Ausgestaltung der Abschnitte- noch verstärkt werden.

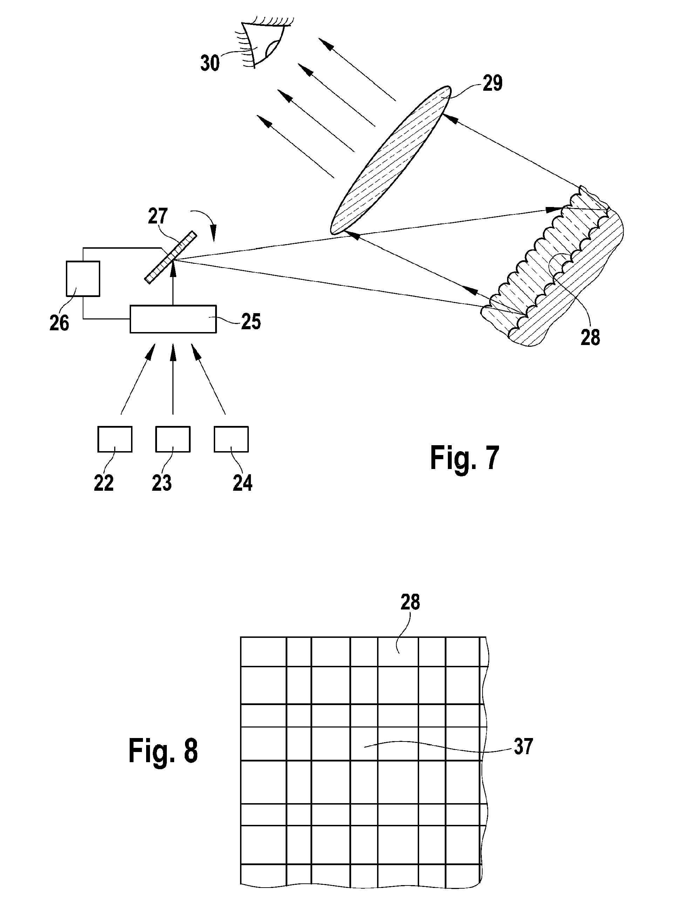

Die Figur 7 zeigt den Gesamtaufbau einer optischen Anzeigeeinrichtung mit Laserlichtquellen 22, 23, 24, die verschiedenfarbiges Licht bereitstellen können, die jedoch auch durch einen durchstimmbaren Laser ersetzt werden können. Das Licht wird zu einer Modulationseinrichtung 25 gestrahlt, die als Durchlichteinheit oder Reflexionseinheit, beispielsweise mit einem LCD-Panel, die Lichtintensität, gesteuert durch eine Steuereinrichtung 26 und in Abhängigkeit von dem anzuzeigenden Bild, entsprechend einstellt.

Die Steuereinrichtung 26 steuert synchron entsprechend den Spiegel 27 an, der in mehreren Richtungen dreh- beziehungsweise schwenkbar ist, um den Laserstrahl wunschgemäß zu lenken.

Mittels des gelenkten Laserstrahls wird dann ein Bild auf die Streuscheibe geschrieben, die mit einer Reflexionsfläche 28 mit einer Vielzahl von Reflexionselementen ausgebildet ist. Diese bildet praktisch eine Gegenstandsebene für die Abbildungsoptik 29, die das Licht bündelt und für einen Betrachter 30 aufbereitet.

Anstelle der Reflexionsfläche 28 kann auch eine Einheit mit mehreren entsprechenden Reflexionsflächen vorgesehen sein, zwischen denen das Bild mehrfach gespiegelt wird. Mit dieser Einheit ist zusätzlich auch ein Mikrolinsenarray kombiniert.

In der Figur 8 ist eine Draufsicht auf eine Reflexionsfläche 28 dargestellt, in der die Abschnitte in Form von rechteckigen Spiegeln 37 unregelmäßig verteilt sind, das heißt mit variablem Pitch, um darüber eine Abbildung von periodischen Strukturen der Reflexionsfläche zu vermeiden. Es findet dadurch zusätzlich ein guter Ausgleich von Speckleeffekten statt.
Ebenso können die gegebenenfalls vorhandenen Krümmungsradien der einzelnen Reflexionselemente unterschiedlich sein.

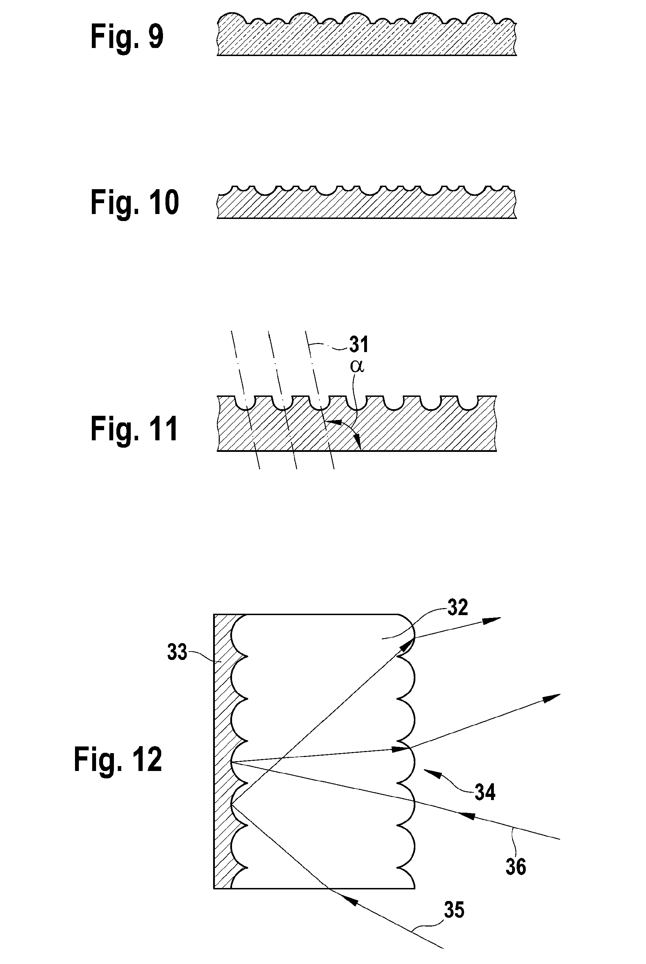

Entsprechende Darstellungen im Querschnitt sind den Figuren 9 und 10 zu entnehmen, wobei die Figur 9 ein Mikrolinsenarray mit erhabenen Linsen zeigt, während die Figur 10 einen Reflexionskörper mit verschieden großen hohlspiegelartigen Reflexionselementen darstellt.

Der Figur 11 ist eine Gestaltung der Reflexionselemente als parabolische Elemente zu entnehmen, wobei jedes Reflexionselement eine Symmetrieachse 31 der rotationsparaboloiden Form aufweist und die Achsen auf der Reflexionsfläche nicht senkrecht stehen, sondern mit dieser einen Winkel Alpha einschließen. Damit wird bei schrägem Einfall auf die Reflexionsfläche das Reflektionsverhalten verbessert und die Abschattung kann verringert werden.

Aus der Figur 12 geht ein transparenter Körper 32 hervor, mit einer Reflexionsfläche 33, die beispielsweise als metallische Beschichtung der Außenfläche des transparenten Körpers 32 ausgebildet sein kann. Die Schraffur des transparenten Körpers ist der Übersichtlichkeit halber weggelassen. An der der Reflexionsfläche 33 gegenüberliegenden Fläche ist durch entsprechende Prägung der Außenseite des transparenten Körpers ein Mikrolinsenarray 34 gebildet.

Als Beispiel sind zwei Eingangstrahlen 35, 36 gezeigt, die entweder durch das Mikrolinsenarray in den transparenten Körper 32 eintreten oder durch eine Seitenfläche und die jeweils durch das Mikrolinsenarray 34 aus dem Körper wieder austreten. So können bei geeigneter Strahlenführung entweder zwei oder drei Passagen der entsprechend mikromechanisch strukturierten optischen Elemente durchlaufen werden.

Der beschriebene Körper 32 hat den Vorteil, dass er sehr einfach und kostengünstig erzeugt werden kann und dass eine Justage der Reflexionsfläche mit den Reflexionselementen gegenüber dem Mikrolinsenarray beim Aufbau der optischen Anzeigevorrichtung nicht notwendig ist.

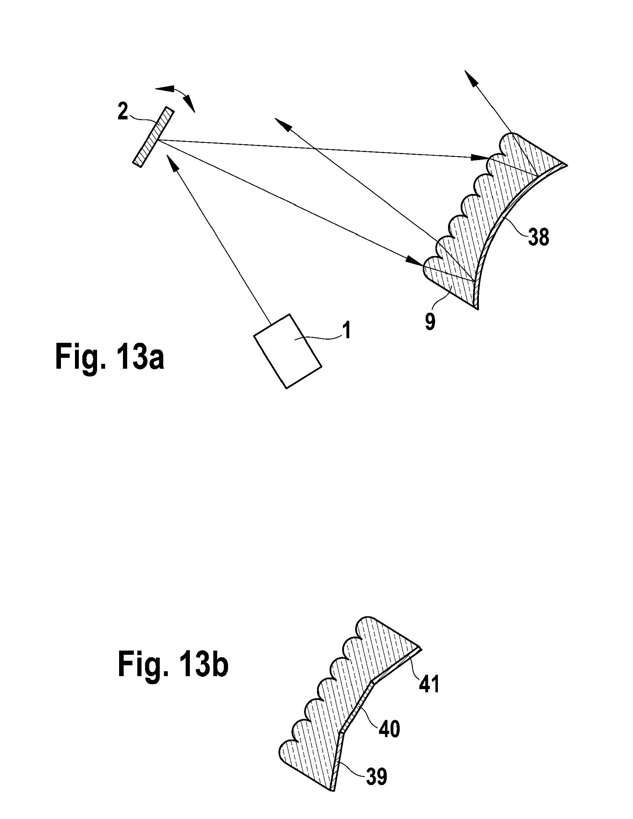

Figur 13a zeigt schematisch den Aufbau einer Anzeigeeinrichtung mit einer Laserlichtquelle 1 sowie einer Laserlenkeinrichtung 2, einem ebenen Mikrolinsenarray 9, dessen konvexe Erhebungen der Lichtquelle zugewandt sind und einer Reflexionsfläche 38, die einen konvexen Hohlspiegel auf makroskopischer Ebene bildet und die entweder insgesamt eine gerundete Fläche oder, wie in Figur 13b dargestellt, eine aus Facetten 39, 40, 41 zusammengesetzte gekrümmte Fläche bildet, die beispielsweise sphärisch oder parabolisch sein kann.
Durch diese Anordnung, die beispielsweise konstruktiv in einem einzigen transparenten Körper zusammengefasst sein kann, ist zusätzlich zu dem Mikrolinsenarray eine telezentrische Linse gebildet, die zusammen mit weiteren, nicht dargestellten, Linsen die Abbildungsoptik vervollständigt. Die konstruktive Einheit kann dabei beispielsweise aus einem transparenten Kunststoff oder Glaswerkstoff bestehen, der auf einer Seite eine Prägung in Form eines Mikrolinsenarrays aufweist und auf der anderen Seite eine entsprechend gekrümmte Fläche, die von außen durch eine metallische Beschichtung verspiegelt ist.

Damit kann ein weiteres optisch brechendes Element im Strahlengang eingespart werden, wodurch die Dispersion verringert wird. Im optischen Strahlengang wird damit das entsprechende Mikrolinsenarray 9 zweimal durchlaufen, wodurch der Effekt der Pupillenvervielfachung optimiert wird und eine entsprechende Specklereduktion erreicht werden kann.

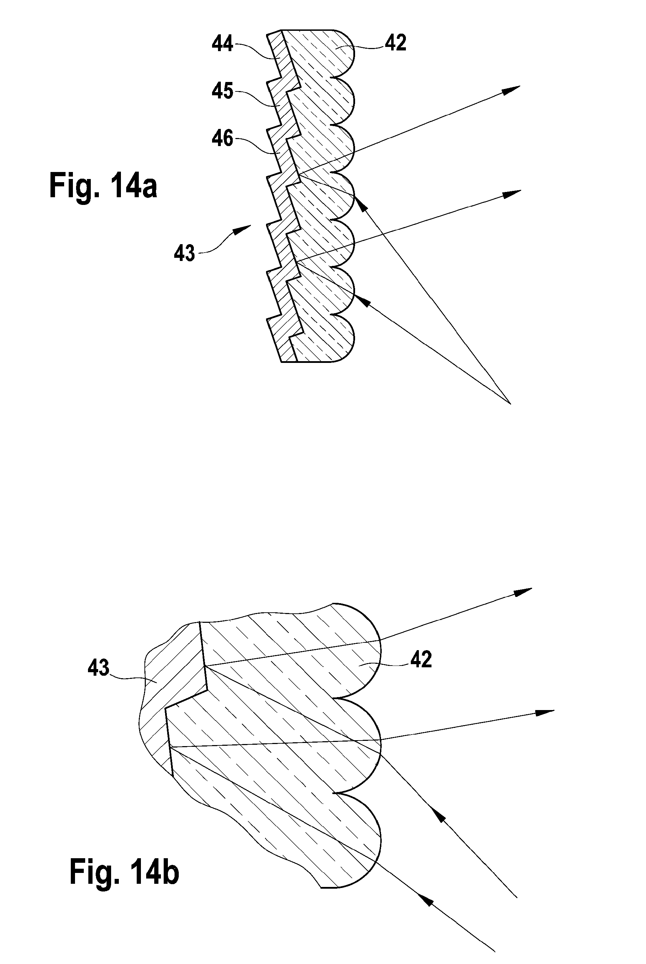

In den Figuren 14a, 14b ist der entsprechende Strahlengang bei einem Mikrolinsenarray 42 dargestellt, das mit einer Reflexionsfläche 43 kombiniert ist, wobei die Reflexionsfläche 43 aus verschiedenen parallel ausgerichteten aber gegeneinander senkrecht zur Reflexionsfläche versetzten Abschnitten 44, 45, 46 besteht. Diese Abschnitte der Reflexionsfläche 43 bilden jeweils Facetten, wobei durch jede Facette Lichtstrahlen, die durch das Mikrolinsenarray 42 eintreten, durch jeweils andere Mikrolinsen zurückreflektiert werden, als die entsprechenden Strahlen beim Eintritt passiert haben.

Auch durch diese Maßnahme findet im Zuge der Pupillenvervielfachung eine Specklereduktion statt. In der Figur 14b ist im Detail der Strahlengang für zwei Bildpunkte dargestellt.

Durch die Neigung der einzelnen Abschnitte 44, 45, 46 gegenüber der Reflexionsfläche lassen sich insbesondere günstig Einheiten herstellen, die für einen Off-Access-Betrieb, das heißt für eine Einstrahlung unter schrägem Winkel gut geeignet sind.

Zusammenfassend lassen sich mit Kombinationen aus Reflexionsflächen, die entsprechend segmentiert beziehungsweise in gegeneinander geneigte Abschnitte aufgeteilt sind, was bis zu einer ebenmäßigen Krümmung gehen kann, reflektierende Module zur Pupillenvervielfachung herstellen, die als platzsparende und effiziente bauliche Einheiten für optische Anzeigeeinrichtungen zur Kohärenzreduktion eingesetzt werden können.

## Patentansprüche

1. Optische Anzeigeinrichtung mit wenigstens einer Laserlichtquelle (1), einer Laserstrahllenkeinrichtung (2) sowie einer Abbildungsoptik (3), mit einem Mikrolinsenarray (9,34,42)
**dadurch gekennzeichnet,**
**dass** die Abbildungsoptik eine Reflexionsfläche (33,38,43) mit einer Vielzahl von Abschnitten (39,40,41,44,45,46) aufweist, die gegeneinander geneigt und/oder verschoben sind.

2. Optische Anzeigeeinrichtung Anspruch 1,
**dadurch gekennzeichnet,**
**dass** die Abschnitte (39,40,41,44,45,46) mit ihren Rändern unmittelbar aneinander anschließen.

3. Optische Anzeigeeinrichtung nach Anspruch 2,
**dadurch gekennzeichnet,**
**dass** die einzelnen Abschnitte (39,40,41,44,45,46) jeweils eine ebene Fläche bilden.

4. Optische Anzeigeeinrichtung nach Anspruch 2,
**dadurch gekennzeichnet,**
**dass** die einzelnen Abschnitte jeweils einen Kugeloberflächenabschnitt bilden.

5. Optische Anzeigeeinrichtung nach Anspruch 1 oder einem der folgenden,
**dadurch gekennzeichnet,**
**dass** die Reflexionsfläche (38) insgesamt konkav oder konvex geformt ist.

6. Optische Anzeigeeinrichtung nach Anspruch 1, 2 oder 3,
**dadurch gekennzeichnet,**
**dass** die Flächennormalen der einzelnen Abschnitte (44,45,46) mit der Flächennormalen der Reflexionsfläche (43) einen Winkel größer als 0° einschließen.

7. Optische Anzeigeeinrichtung nach Anspruch 6,
**dadurch gekennzeichnet,**
**dass** die Flächennormalen der Abschnitte zueinander zumindest gruppenweise parallel sind.

8. Optische Anzeigeeinrichtung nach Anspruch 1 oder einem der folgenden,
**dadurch gekennzeichnet,**
**dass** die Abschnitte (39,40,41,44,45,46) aus einem spiegelnden Material, insbesondere einem Metall bestehen oder mit einem derartigen Material beschichtet sind.

9. Optische Anzeigeeinrichtung nach Anspruch 1 oder einem der folgenden,
**dadurch gekennzeichnet,**
**dass** die Zahl der Abschnitte (39,40,41,44,45,46) zwischen dem 0,5-fachen und dem 2-fachen der Zahl der Mikrolinsen liegt.

10. Optische Anzeigeeinrichtung nach Anspruch 9,
**dadurch gekennzeichnet,**
**dass** jeder Mikrolinse (11,12,13) ein Abschnitt (39,40,41,44,45,46) zugeordnet ist.

11. Optische Anzeigeeinrichtung nach Anspruch 1 oder einem der folgenden,
**dadurch gekennzeichnet,**
**dass** die individuelle Ausdehnung einzelner Abschnitte (39,40,41,44,45,46) und/oder der Mikrolinsen des Mikrolinsenarrays (9,34,42) jeweils quer zur optischen Strahlrichtung entlang der von dem Laserstrahl überstrichenen Fläche variiert.

12. Optische Anzeigeeinrichtung nach Anspruch 1 oder einem der folgenden, wobei die einzelnen Abschnitte eine konvexe oder konkave Fläche bilden,
**dadurch gekennzeichnet,**
**dass** die Brennweite der einzelnen in den Abschnitten gebildeten Hohlspiegel über die Reflexionsfläche variiert.

13. Optische Anzeigeeinrichtung nach Anspruch 1 oder einem der folgenden,
**dadurch gekennzeichnet,**
**dass** die Brennweite der einzelnen Mikrolinsen (11,12,13) des Mikrolinsenarrays (9,34,42) über die Fläche des Mikrolinsenarrays variiert.

14. Optische Anzeigeeinrichtung nach Anspruch 1 oder einem der folgenden,
**dadurch gekennzeichnet,**
**dass** der Laserstrahl und die Größe der Abschnitte der Reflexionsfläche derart aufeinander abgestimmt sind, dass der Laserfleck auf der Reflexionsfläche mehr als einen einzelnen Abschnitt(39,40,41,44,45,46) berührt.
